# EUROPÄISCHE PATENTSCHRIFT

(11) **EP 1 731 375 B1**
(45) Veröffentlichungstag und Bekanntmachung des Hinweises auf die Patenterteilung: **05.03.2008**
(21) Anmeldenummer: 05025896.1
(22) Anmeldetag: 28.11.2005
(51) Int. Cl.: B60R 21/0132, B60R 21/0136

(54) **Verfahren zur Klassifizierung eines Zusammenstossereignisses**
Method for classifying a collision event
Procédé destiné à la classification d' un évènement de collision

(30) Priorität: 08.06.2005 GB 0511562
(43) Veröffentlichungstag der Anmeldung: 13.12.2006
(73) Patentinhaber: Delphi Technologies, Inc., Troy, MI 48007 (US)
(72) Erfinder: Dwivedi, Manoj, Kasturi Nagar Bangalore 560016 (IN)
(74) Vertreter: Manitz, Finsterwald & Partner GbR

(56) Entgegenhaltungen:
- EP-A- 1 375 261
- WO-A-20/05001488
- DE-A1- 10 018 985
- GB-A- 2 376 118
- US-A1- 2003 097 212
- US-A1- 2003 105 569
- US-B1- 6 898 498

## Beschreibung

Die Erfindung betrifft ein Verfahren zur Klassifizierung eines Zusammenstoßereignisses und insbesondere zur Detektion eines Zusammenstoßes eines Kraftfahrzeugs mit einer Person, beispielsweise einem Fußgänger, durch Auswertung der von einem Beschleunigungssensor ausgegebenen Beschleunigungswerte.

Bekannt sind Verfahren zur Detektion eines Zusammenstoßes eines Kraftfahrzeugs mit einem anderen Kraftfahrzeug mittels zweier Beschleunigungssensoren, die im Bereich eines Stoßfängers des Kraftfahrzeugs angeordnet sind. Diese Verfahren ermöglichen die Evaluierung eines Zusammenstoßes und die Auslösung passiver Sicherheitsmaßnahmen zum Schutz von Fahrzeuginsassen in Abhängigkeit von der Evaluierung des Zusammenstoßes.

Neuere Sicherheitsvorschriften für Kraftfahrzeuge machen aktive Sicherheitseinrichtungen zum Schutz einer außerhalb des Kraftfahrzeugs befindlichen und von dem Kraftfahrzeug erfassten Person erforderlich. Eine geeignete Sicherheitseinrichtung reduziert beispielsweise die Kräfte, mit denen der Kopf einer durch das Kraftfahrzeug erfassten Person auf das Kraftfahrzeug auftrifft, um dadurch einen tödlichen Ausgang des Zusammenstoßes zu verhindern. Eine zu diesem Zweck vorgesehene Sicherheitseinrichtung kann bei einem Zusammenstoß des Kraftfahrzeugs mit einer Person z.B. eine Anhebung der Motorhaube bewirken, wodurch der Abstand zwischen der Motorhaube und dem Motorblock erhöht und der Durchschlag des Kopfs der Person auf den Motorblock verhindert wird.

Die herkömmlichen Verfahren zur Detektion von Zusammenstößen sind aufgrund einer mangelnden Genauigkeit der Evaluierung der Zusammenstöße nicht zur Auslösung einer Sicherheitseinrichtung zum Schutz einer außerhalb des Kraftfahrzeugs befindlichen und von dem Kraftfahrzeug erfassten Person geeignet.

Die mangelnde Evaluierungsgenauigkeit resultiert zum einen daraus, dass die bei Kraftfahrzeug-Kraftfahrzeug-Zusammenstößen gemessenen Beschleunigungswerte eine im Vergleich zu Beschleunigungswerten bei Zusammenstößen zwischen Kraftfahrzeugen und Personen, die nachfolgend als Personenzusammenstöße bezeichnet werden, wesentlich größere Bandbreite aufweisen, so dass entsprechende Detektionsverfahren in dem für die Detektion von Personenzusammenstößen relevanten Messbereich eine zu grobe Messauflösung aufweisen.

Ferner wird ein Airbag im Falle eines besonders heftigen Kraftfahrzeug-Kraftfahrzeug-Zusammenstoßes früher ausgelöst als bei einem weniger heftigen Zusammenstoß. Im Fall eines Personenzusammenstoßes soll die Einleitung von Sicherheitsmaßnahmen jedoch ausschließlich dann erfolgen, wenn das Kraftfahrzeug tatsächlich mit einer Person zusammenstößt und nicht bei einem Zusammenstoß mit einem Objekt, welches weicher, steifer oder schwerer als eine Person ist, z.B. ein Metallpfosten, ein Baum, ein Schneehaufen, ein Einkaufswagen oder ein anderes Fahrzeug. Herkömmliche Detektionsverfahren leisten in diesem vergleichsweise kleinen Ausschnitt aller möglichen Zusammenstoßereignisse nicht die erforderliche Empfindlichkeit.

Des weiteren geben die Beschleunigungssensoren bekannter Zusammenstoß-Detektionssysteme unter bestimmten Bedingungen, wie z.B. bei einer bestimmten Geschwindigkeit des Kraftfahrzeugs und/oder bei einem Auftreten des Zusammenstoßes an einer bestimmten Stelle des Stoßfängers des Kraftfahrzeugs, auch bei einem Zusammenstoß des Kraftfahrzeugs mit einem nichtmenschlichen Objekt Signale aus, die den bei einem Personenzusammenstoß ausgegebenen Signalen ähnlich sind. Dadurch ist die Gefahr irrtümlicher Auslösungen von Sicherheitsmaßnahmen bei herkömmlichen Detektionsverfahren unakzeptabel hoch.

Die US-B-6 898 498, als nächstliegender Stand der Technik betrachtet, offenbart ein Verfahren zur Klassifizierung eines Zusammenstoßereignisses, bei dem Kollisionsdaten von einem zentralen Beschleunigungssensor und mehreren Satelliten-Beschleunigungssensoren an eine zentrale Steuereinheit geliefert werden. Die zentrale Steuereinheit analysiert die gesammelten Kollisionsdaten, indem sie aus den Sensordaten Charakterisierungstabellen erstellt. Durch das Anwenden verschiedener Masken auf diese Tabellen wird das Zusammenstoßereignis klassifiziert und entschieden, ob eine und ggf. welche Sicherheitsmaßnahme einzuleiten ist.

Der Erfindung liegt die Aufgabe zugrunde, ein zuverlässigeres Verfahren zur Detektion eines Zusammenstoßes eines Kraftfahrzeugs mit einer Person zu schaffen.

Zur Lösung der Aufgabe ist ein Verfahren mit den Merkmalen des Anspruchs 1 vorgesehen.

Bei dem erfindungsgemäßen Verfahren wird durch ein Zusammenstoßereignis eine Auswertung der während eines vorbestimmten Auswertungszeitraums von einem Beschleunigungssensor ausgegebenen Beschleunigungswerte ausgelöst, welche die Schritte umfasst:
Ermitteln von Geschwindigkeitswerten und Wegwerten aus den ausgegebenen Beschleunigungswerten,
Einstufen des Zusammenstoßereignisses hinsichtlich der Beschleunigungswerte, der Geschwindigkeitswerte und der Wegwerte in jeweils eine von mehreren Kategorien, insbesondere in eine der Kategorien "weicher Zusammenstoß", "Personenzusammenstoß" und "harter Zusammenstoß", und
Klassifizieren des Zusammenstoßereignisses in Abhängigkeit von den Kategorien, in die das Zusammenstoßereignis hinsichtlich der Beschleunigungswerte, der Geschwindigkeitswerte und der Wegwerte jeweils eingestuft wurde.

Das erfindungsgemäße Verfahren ermöglicht die Unterscheidung eines Zusammenstoßes eines Kraftfahrzeugs mit einer Person, z.B. einem Fußgänger, von Zusammenstößen des Kraftfahrzeugs mit z.B. nichtmenschlichen Objekten, die eine Signalausgabe des Beschleunigungssensors verursachen können, welche der durch eine Person hervorgerufenen Signalsausgabe ähnlich ist. Bei solchen Objekten kann es sich beispielsweise um Metallpfosten, Plastikrohre, Mülleimer, Einkaufswägen, Bäume, Schneehaufen etc. handeln.

Erfindungsgemäß ist folglich eine besonders zuverlässige Detektion eines Zusammenstoßes eines Kraftfahrzeugs mit einer Person möglich. Der Zusammenstoß wird mit anderen Worten mit einer besonders hohen Sicherheit als ein Personenzusammenstoß erkannt.

Somit lässt sich erfindungsgemäß nicht nur die Gefahr einer Nichtauslösung einer Sicherheitseinrichtung zum Schutz einer mit einem Kraftfahrzeug kollidierenden Person, sondern auch die Gefahr einer unnötigen Auslösung der Sicherheitseinrichtung im Fall eines irrtümlicherweise als Personenzusammenstoß klassifizierten Zusammenstoßereignisses reduzieren.

Dies führt letztlich nicht nur zu einer Erhöhung der Sicherheit im Stra-ßenverkehr, nämlich zum einen durch einen verbesserten Schutz einer von einem Kraftfahrzeug erfassten Person und zum anderen durch ein reduziertes Risiko einer Ablenkung eines Kraftfahrzeugführers durch eine irrtümlicherweise aktivierte Sicherheitseinrichtung, sondern auch zu einer Vermeidung unnötiger Reparaturkosten, die bei einer irrtümlichen Aktivierung der Sicherheitseinrichtung anfallen würden.

Das erfindungsgemäße Verfahren kann mit Hilfe einer bekannten Anordnung von im Bereich eines Stoßfängers eines Kraftfahrzeugs angeordneten Beschleunigungssensoren durchgeführt werden. Auf diese Weise lässt sich das erfindungsgemäße Verfahren auch in bereits bestehende Systeme implementieren.

Im Gegensatz zu herkömmlichen Zusammenstoßdetektionsverfahren, welche zur Evaluierung eines Zusammenstoßereignisses ausschließlich positive Beschleunigungswerte verwenden, beruht das erfindungsgemäße Verfahren auf einer Auswertung des vollständigen Beschleunigungssignals, und zwar unabhängig von dem Vorzeichen des Beschleunigungsereignisses.

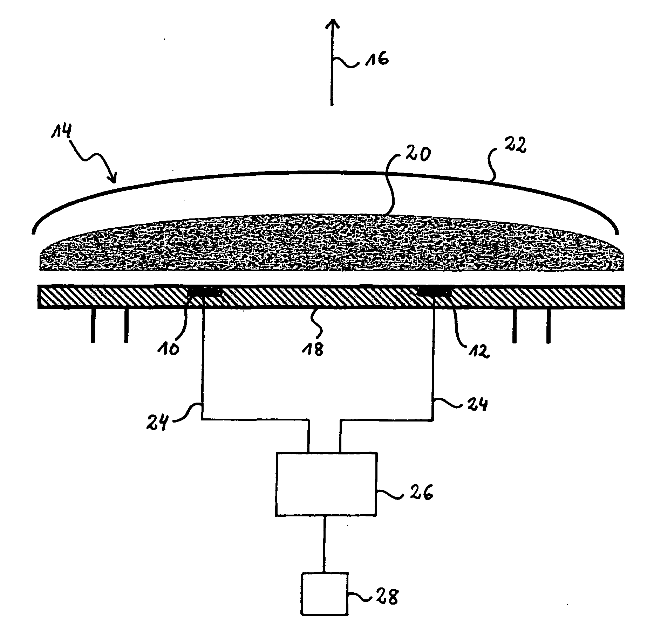

Vorteilhafte Ausbildungen der Erfindung sind den Unteransprüchen, der Beschreibung und der Zeichnung zu entnehmen.

Gemäß einer bevorzugten Ausführungsform erfolgt die Kategorisierung des Zusammenstoßereignisses hinsichtlich Beschleunigung, Geschwindigkeit und Weg anhand der Beschleunigungs-, der Geschwindigkeits- und der Wegwerte eines einzelnen von mindestens zwei im Bereich eines Kraftfahrzeug-Stoßfängers angeordneten und insbesondere lateral zueinander beabstandeten Beschleunigungssensoren. Die Menge der auszuwertenden Daten ist somit reduziert, wodurch eine schnellere Klassifizierung des Zusammenstoßereignisses erreicht wird. Dies ermöglicht eine besonders schnelle Einleitung von Sicherheitsmaßnahmen bei einem Zusammenstoß des Kraftfahrzeugs mit einer Person.

Die Kategorisierung des Zusammenstoßereignisses hinsichtlich Beschleunigung, Geschwindigkeit und Weg kann anhand der Beschleunigungs-, der Geschwindigkeits- und der Wegwerte desjenigen Beschleunigungssensors erfolgen, der zuerst auf das Zusammenstoßereignis anspricht oder - falls beide Beschleunigungssensoren gleichzeitig ansprechen - dessen Beschleunigungswert zuerst einen vorbestimmten Auslöseschwellenwert überschreitet.

Vorteilhafterweise erfolgt die Kategorisierung des Zusammenstoßereignisses hinsichtlich der Beschleunigungswerte während eines Bruchteils des vorbestimmten Auswertungszeitraums. So kann die Kategorisierung des Zusammenstoßereignisses hinsichtlich der Beschleunigungswerte z.B. während der ersten Hälfte des Auswertungszeitraums stattfinden. Dies ermöglicht eine besonders schnelle vorläufige Einschätzung, ob das detektierte Zusammenstoßereignis überhaupt für einen Personzusammenstoß in Frage kommt. Anhand dieser vorläufigen Einschätzung kann eine Vorabentscheidung dahingehend getroffen werden, ob die Auswertung fortzusetzen oder abzubrechen ist.

Die vorläufige Einschätzung bzw. die Vorabentscheidung kann innerhalb weniger Millisekunden getroffen werden. Beispielsweise kann die Länge des vorbestimmten Auswertungszeitraums etwa 10 ms betragen und die Kategorisierung des Zusammenstoßereignisses hinsichtlich der Beschleunigungswerte während der ersten 5 ms erfolgen. Die Beschleunigungswerte können dabei mit einer Rate von 1 ms⁻¹ aus dem Beschleunigungssensor ausgelesen werden.

Bevorzugt wird ein Zusammenstoßereignis als ein Zusammenstoß mit einer Person klassifiziert, wenn (i) das Zusammenstoßereignis sowohl hinsichtlich der Geschwindigkeitswerte als auch hinsichtlich der Wegwerte jeweils in die Kategorie "Personenzusammenstoß" eingestuft wird, oder (ii) das Zusammenstoßereignis hinsichtlich der Geschwindigkeitswerte und der Wegwerte jeweils in die Kategorie "harter Zusammenstoß" und hinsichtlich der Beschleunigungswerte in die Kategorie "weicher Zusammenstoß" eingestuft wird. Eine Klassifizierung eines Zusammenstoßereignisses als Personenzusammenstoß gemäß diesen Kriterien hat sich als besonders zuverlässig erwiesen.

Gemäß einer weiteren Ausführungsform erfolgt die Kategorisierung des Zusammenstoßereignisses hinsichtlich Beschleunigung, Geschwindigkeit und Weg in Abhängigkeit davon, ob das Minimum, das Maximum und die Differenz von Minimum und Maximum der Beschleunigungs-, Geschwindigkeits- bzw. Wegwerte jeweils entsprechende Schwellenwerte überschreiten.

Die Höhe der Schwellenwerte hängt bevorzugt von der Position des Zusammenstoßes relativ zu dem Beschleunigungssensor und insbesondere davon ab, ob es sich um einen zentralen oder einen dezentralen Zusammenstoß handelt. Als ein dezentraler Zusammenstoß ("corner crash") wird dabei ein Zusammenstoß bezeichnet, der in einem Endbereich eines Stoßfängers des Kraftfahrzeugs stattfindet, wohingegen unter einem zentralen Zusammenstoß ("center crash") ein Zusammenstoß verstanden wird, der in einem mittleren Bereich des Stoßfängers erfolgt.

Die Position des Zusammenstoßes relativ zu dem Beschleunigungssensor kann anhand der Beschleunigungswerte zweier im Bereich eines Kraftfahrzeug-Stoßfängers angeordneter und insbesondere lateral zueinander beabstandeter Beschleunigungssensoren ermittelt werden. Vorteilhafterweise erfolgt die Ermittlung der Position des Zusammenstoßes während eines Bruchteils des vorbestimmten Auswertungszeitraums, beispielsweise innerhalb der ersten Hälfte des Auswertungszeitraums.

Die Ermittlung der Position des Zusammenstoßes erlaubt nicht nur die voranstehend beschriebene Anpassung der zur Kategorisierung des Zusammenstoßereignisses herangezogenen Schwellenwerte, sondern sie ermöglicht ggf. auch eine lokal begrenzte Auslösung einer Sicherheitseinrichtung zum Schutz einer mit dem Kraftfahrzeug kollidierenden Person. Bei einem rechten "corner crash" kann es beispielsweise ausreichend sein, lediglich einen rechten Teil der Sicherheitseinrichtung zu aktivieren. Auf diese Weise ist es möglich eine unnötige Auslösung eines nicht benötigten Teils der Sicherheitseinrichtung zu vermeiden.

Bevorzugt wird ein Zusammenstoß als zentraler Zusammenstoß ("center crash") eingestuft, wenn (a) der Verlauf der von den beiden Beschleunigungssensoren ausgegebenen Signale nicht wesentlich voneinander abweicht, (b) sich die Variation der Beschleunigungswerte des einen Beschleunigungssensors nicht wesentlich von der Variation der Beschleunigungswerte des anderen Beschleunigungssensors unterscheidet, und (c) die Abweichung der Beschleunigungswerte des einen Beschleunigungssensors von denen des anderen Beschleunigungssensors nicht im Bereich der Beschleunigungswerte selbst liegt.

Das erste Kriterium beruht auf einer qualitativen Analyse der Beschleunigungssignale und ist z.B. erfüllt, wenn die Signale beider Beschleunigungssensoren gleichzeitig zu- oder abnehmen. Das zweite Kriterium ist erfüllt, wenn die Variation der Signale des einen Beschleunigungssensors nicht mehr als etwa das Zweifache der Variation der Signale des anderen Sensors beträgt. Das dritte Kriterium schließlich ist erfüllt, wenn die Abweichung der Werte des einen Beschleunigungssensors von denen des anderen Beschleunigungssensors weniger als etwa die Hälfte der von jeweils einem Beschleunigungssensor ausgegebenen Werte beträgt, z.B. wenn die Signale der beiden Beschleunigungssensoren etwa gleich groß sind. Es handelt sich hierbei also um ein quantitatives Kriterium.

Gemäß einer weiteren Ausführungsform werden die während des Auswertungszeitraums ausgegebenen Beschleunigungswerte mit einem Kalibrierungsfaktor multipliziert, welcher von der Fahrzeuggeschwindigkeit und vom Fahrzeugtyp bzw. von der Stoßfängerstruktur abhängig ist. Vorteilhafterweise erfolgt die Multiplikation mit dem Kalibrierungsfaktor noch bevor die Geschwindigkeits- und die Wegwerte aus den Beschleunigungswerten ermittelt werden. Durch die Kalibrierung der Beschleunigungswerte brauchen die Fahrzeuggeschwindigkeit und der Fahrzeugtyp bei der nachfolgenden Auswertung der kalibrierten Beschleunigungswerte, der Geschwindigkeitswerte und der Wegwerte nicht mehr berücksichtigt zu werden. Dadurch ist die Klassifizierung eines Zusammenstoßereignisses erheblich vereinfacht und somit noch schneller durchführbar.

Gemäß einer weiteren Ausführungsform werden die während des Auswertungszeitraums ausgegebenen Beschleunigungswerte normiert, insbesondere durch Subtraktion des kleinsten der ausgegebenen Beschleunigungswerte. Die Normierung erfolgt vorteilhafterweise ebenfalls vor der Ermittlung der Geschwindigkeits- und der Wegwerte. Durch die Normierung ist die Zuverlässigkeit des Verfahrens und insbesondere die Sicherheit einer korrekten Identifizierung eines Personenzusammenstoßes noch weiter erhöht.

Nachfolgend wird die Erfindung rein beispielhaft anhand einer vorteilhaften Ausführungsform unter Bezugnahme auf die beigefügte Zeichnung beschrieben.

Die einzige Figur zeigt eine schematische Querschnittsansicht einer Sensoranordnung zur Durchführung des erfindungsgemäßen Verfahrens.

Die Sensoranordnung umfasst zwei im Bereich eines vorderen Stoßfängers 14 eines Kraftfahrzeugs angeordnete Beschleunigungssensoren 10, 12. Der Stoßfänger 14 weist einen sich quer zur Fahrtrichtung 16 des Kraftfahrzeugs erstreckenden Metallträger 18 auf, welcher an seiner in Fahrtrichtung 16 weisenden Seite mit einem Energie absorbierenden Schaummaterial 20 versehen ist, z.B. einem Schaumkörper aus expandiertem Polypropylen, welches seinerseits mit einer Außenhaut 22 überzogen ist.

Wie der Figur zu entnehmen ist, sind die Beschleunigungssensoren 10, 12 an dem Metallträger 18 des Stoßfängers 14 derart angebracht, dass sie quer zur Fahrtrichtung 16 gesehen einen Abstand zueinander aufweisen. Über elektrische Leitungen 24 sind die Beschleunigungssensoren 10, 12 mit einer Auswerteeinheit 26 verbunden, die zur Auswertung der von den Beschleunigungssensoren 10, 12 ausgegebenen Signale dient.

Bei den von den Beschleunigungssensoren 10, 12 ausgegebenen Signalen kann es sich um elektrische Spannungswerte handeln, die mit der durch die Beschleunigungssensoren 10, 12 detektierten Beschleunigung des Stoßfängers 14 und somit des Kraftfahrzeugs insgesamt korrelieren. Entsprechend werden die von den Beschleunigungssensoren 10, 12 ausgegebenen Signale hier auch als Beschleunigungswerte bezeichnet.

Mit Hilfe der Auswerteeinheit 26 werden die von den Beschleunigungssensoren 10, 12 ausgegebenen Beschleunigungswerte überwacht und bei einem Zusammenstoß des Kraftfahrzeugs mit einem Objekt gemäß dem erfindungsgemäßen Verfahren ausgewertet. Die Auswertung erfolgt zum Zwecke einer Klassifizierung des Zusammenstoßereignisses und insbesondere der Festzustellung, ob ein Personenzusammenstoß, d.h. ein Zusammenstoß des Kraftfahrzeugs mit einer Person, wie z.B. einem Fußgänger, vorliegt.

Ist letzteres der Fall, so gibt die Auswerteeinheit 26 ein Auslösesignal an eine Sicherheitseinrichtung 28 aus, die geeignete Sicherheitsmaßnahmen zum Schutz der von dem Kraftfahrzeug erfassten Person einleitet. Diese Sicherheitsmaßnahmen können beispielsweise das Anheben einer Kraftfahrzeugmotorhaube umfassen, um den Abstand zwischen der Motorhaube und dem Motorblock zu vergrößern und somit einen Durchschlag der Person durch die Motorhaube auf den Motorblock zu verhindern.

Nachfolgend wird das erfindungsgemäße Verfahren zur Klassifizierung eines Zusammenstoßereignisses näher erläutert.

Zur Überwachung der Beschleunigung des Kraftfahrzeugs werden die Beschleunigungssensoren 10, 12 in regelmäßigen zeitlichen Abständen durch die Auswerteeinheit 26 ausgelesen. Im dargestellten Ausführungsbeispiel werden die Beschleunigungswerte jede Millisekunde abgefragt. Grundsätzlich können die Beschleunigungssensoren 10, 12 aber auch mit einer niedrigeren oder höheren Rate ausgelesen werden, je nach Anforderung der Sicherheitseinrichtung 28 und insbesondere Schnelligkeit deren Aktuatorik. So könnte die Ausleserate im Falle einer schnelleren Aktuatorik zum Beispiel kleiner gewählt werden als bei einer langsameren Aktuatorik.

Die zuletzt ausgelesenen Beschleunigungswerte werden in der Auswerteeinheit 26 mit den jeweils vorherigen Beschleunigungswerten verglichen. Unterscheidet sich ein aktueller Beschleunigungswert signifikant von seinem vorherigen Beschleunigungswert, d.h. überschreitet die Differenz zwischen dem aktuellen Beschleunigungswert und dem vorherigen Beschleunigungswert einen vorbestimmten kalibrierten Auslösungsschwellenwert, so wird das Vorliegen eines Zusammenstoßereignisses angenommen und eine weitergehende Auswertung der Beschleunigungswerte während eines vorbestimmten Auswertungszeitraums ausgelöst. Im dargestellten Ausführungsbeispiel beträgt der Auswertungszeitraum 10 ms. Grundsätzlich kann er aber auch kürzer oder länger sein, je nach Anforderung der Sicherheitseinrichtung 28 und insbesondere Schnelligkeit deren Aktuatorik. So könnte der Auswertungszeitraum im Falle einer schnelleren Aktuatorik zum Beispiel länger gewählt werden als bei einer langsameren Aktuatorik.

Für die weitergehende Auswertung wird die Position des Zusammenstoßes bezüglich des Stoßfängers 14 und somit relativ zu den Beschleunigungssensoren 10, 12 ermittelt, d.h. es wird festgestellt, ob der Zusammenstoß in einem mittleren Bereich des Stoßfängers 14 erfolgt ist, oder ob er in einem Endbereich des Stoßfängers 14 stattgefunden hat. Entsprechend wird der Zusammenstoß als "center crash" oder "corner crash" bezeichnet.

Die Ermittlung der Position des Zusammenstoßes erfolgt durch Auswertung der Beschleunigungswerte beider Beschleunigungssensoren 10, 12 innerhalb eines Bruchteils des vorbestimmten Auswertungszeitraums, im vorliegenden Ausführungsbeispiel während der ersten Hälfte des Auswertungszeitraums, mit anderen Worten also während der ersten 5 ms nach Auslösung der weitergehenden Auswertung. Ein Zusammenstoß wird als zentraler Zusammenstoß eingestuft, wenn jede der folgenden drei Bedingungen erfüllt ist:
(a) Der Verlauf der von den beiden Beschleunigungssensoren 10, 12 ausgegebenen Beschleunigungswerte weicht nicht wesentlich voneinander ab, d.h. wenn die Beschleunigungswerte des einen Beschleunigungssensors 10 zunehmen, nehmen auch die Beschleunigungswerte des anderen Beschleunigungssensors 12 zu und umgekehrt.
(b) Die Variation der Beschleunigungswerte, d.h. die Variation der Signalamplituden, des einen Beschleunigungssensors 10 unterscheidet sich nicht wesentlich von der Variation der Beschleunigungswerte des anderen Beschleunigungssensors 12. Dies ist bei dem vorliegenden Ausführungsbeispiel der Fall, solange die Variation der Beschleunigungswerte des einen Beschleunigungssensors 10 nicht mehr als etwa das Zweifache der Variation der Beschleunigungswerte des anderen Beschleunigungssensors 12 beträgt.
(c) Die Abweichung der Beschleunigungswerte des einen Beschleunigungssensors 10 von denen des anderen Beschleunigungssensors 12, d.h. die Variation der Signale von Sensor zu Sensor, liegt nicht im Bereich der Beschleunigungswerte selbst. Dies ist bei dem vorliegenden Ausführungsbeispiel der Fall, solange die Abweichung weniger als etwa die Hälfte der Beschleunigungswerte der Beschleunigungssensoren 10, 12 beträgt. Diese Bedingung ist mit anderen Worten erfüllt, wenn die von den Beschleunigungssensoren 10, 12 ausgegebenen Beschleunigungswerte etwa gleich groß sind.

In allen anderen Fällen wird ein Zusammenstoß als ein dezentraler Zusammenstoß eingestuft.

Für die nachfolgenden Auswertungsschritte werden die Beschleunigungswerte nur noch eines der beiden Beschleunigungssensors 10, 12 berücksichtigt, und zwar desjenigen Beschleunigungssensors 10, 12 welcher das Zusammenstoßereignis zuerst detektiert hat. Für den Fall, dass die Beschleunigungssensoren 10, 12 den Zusammenstoß gleichzeitig detektiert haben, werden die Beschleunigungswerte desjenigen Beschleunigungssensors 10, 12 für die weitere Auswertung verwendet, bei dem die Änderung der Beschleunigungswerte zuerst einen kalibrierten Mindestbeschleunigungsschwellenwert überschreitet. Der Beschleunigungssensor, dessen Beschleunigungswerte für die weitere Auswertung herangezogen werden, wird nachfolgend als erster Beschleunigungssensor 10 bezeichnet.

Nach der Ermittlung der Position des Zusammenstoßes werden die während des Auswertungszeitraums von dem ersten Beschleunigungssensor 10 ausgegebenen Beschleunigungswerte mit einem Kalibrierungsfaktor multipliziert und abgespeichert. Der Kalibrierungsfaktor ist an den Typ des Kraftfahrzeugs, in dem das erfindungsgemäße Verfahren durchgeführt wird, angepasst und abhängig von der Geschwindigkeit des Kraftfahrzeugs zum Zeitpunkt des zu klassifizierenden Zusammenstoßes. Aufgrund der Kalibrierung der Beschleunigungswerte mit dem geschwindigkeitsabhängigen Kalibrierungsfaktor braucht die für die Klassifizierung des Zusammenstoßereignisses relevante Fahrzeuggeschwindigkeit bei den noch folgenden Verfahrensschritten nicht weiter berücksichtigt zu werden.

Um eine schnelle Vorabentscheidung zu treffen, ob das detektierte Zusammenstoßereignis überhaupt als Personenzusammenstoß in Frage kommt, wird die erste Hälfte der kalibrierten Beschleunigungswerte des ersten Beschleunigungssensors 10, im vorliegenden Fall also die ersten fünf Beschleunigungswerte, hinsichtlich ihres Minimums, ihres Maximums und ihrer Bandbreite, d.h. der Differenz von Minimum und Maximum, ausgewertet und anhand des Auswertungsergebnisses eine Kategorisierung des Zusammenstoßes in eine der Kategorien "weicher Zusammenstoß", "Personenzusammenstoß" und "harter Zusammenstoß" vorgenommen.

Dabei wird ein Zusammenstoßereignis mit einem niedrigen Minimum und einem niedrigen Maximum der Beschleunigungswerte sowie einer kleinen Bandbreite von Beschleunigungswerten als ein "weicher Zusammenstoß" eingestuft und ein Zusammenstoßereignis mit einem hohen Minimum und Maximum der Beschleunigungswerte oder mit einer großen Bandbreite von Beschleunigungswerten als ein "harter Zusammenstoß" eingestuft.

Ein Zusammenstoßereignis, bei dem das Minimum, das Maximum und die Bandbreite der Beschleunigungswerte zwischen den entsprechenden Schwellenwerten für die Kategorien "weicher Zusammenstoß" und "harter Zusammenstoß" liegen, wird hingegen in die Kategorie "Personenzusammenstoß" eingestuft. Dabei ist die Höhe der Schwellenwerte für die Kategorien "weicher Zusammenstoß" und "harter Zusammenstoß" davon abhängig, ob es sich bei dem detektierten Zusammenstoßereignis um einen zentralen Zusammenstoß oder um einen dezentralen Zusammenstoß handelt.

Sobald alle während des vorbestimmten Auswertungszeitraums von dem ersten Beschleunigungssensor 10 ausgegebenen Beschleunigungswerte in der Auswerteeinheit 26 vorliegen, wird der kleinste dieser Werte ermittelt und von den anderen Beschleunigungswerten subtrahiert. Auf diese Weise werden die während des Auswertungszeitraums ausgegebenen Beschleunigungswerte des ersten Beschleunigungssensors 10 in positive Beschleunigungswerte konvertiert, gewissermaßen also normiert.

Im vorliegenden Fall erfolgt die Normierung der Beschleunigungswerte nach der voranstehend beschriebenen Kalibrierung der Beschleunigungswerte. Grundsätzlich ist es aber auch möglich, die Beschleunigungswerte erst zu normieren und anschließend zu kalibrieren.

Aus den kalibrierten und normierten Beschleunigungswerten des ersten Beschleunigungssensors 10 werden mittels einfacher Integration oder Summation entsprechende Geschwindigkeitswerte und mittels zweifacher Integration bzw. Summation entsprechende Wegwerte ermittelt.

Ähnlich wie die Beschleunigungswerte werden auch die ermittelten Geschwindigkeitswerte hinsichtlich ihres Minimums, ihres Maximums und ihrer Bandbreite ausgewertet. In Abhängigkeit von dem Zeitpunkt, zu dem die ermittelten Geschwindigkeitswerte einen entsprechenden Satz vorbestimmter Geschwindigkeitsschwellenwerte überschreiten, wird das Zusammenstoßereignis in eine der Kategorien "weicher Zusammenstoß", "Personenzusammenstoß" und "harter Zusammenstoß" eingestuft. Die Höhe der Geschwindigkeitsschwellenwerte variiert ebenfalls in Abhängigkeit davon, ob es sich bei dem zu klassifizierenden Zusammenstoßereignis um einen zentralen oder einen dezentralen Zusammenstoß handelt.

Entsprechend werden auch die ermittelten Wegwerte bezüglich ihres Minimums, ihres Maximums und ihrer Bandbreite ausgewertet. In Abhängigkeit von dem Zeitpunkt, zu dem die Wegwerte einen Satz vorbestimmter Wegschwellenwerte überschreiten, wird das zu klassifizierende Zusammenstoßereignis in eine der Kategorien "weicher Zusammenstoß", "Personenzusammenstoß" und "harter Zusammenstoß" eingestuft. Auch die Höhe der Wegschwellenwerte hängt davon ab, ob es sich um einen zentralen oder einen dezentralen Zusammenstoß handelt.

Nach erfolgter Kategorisierung des auszuwertenden Zusammenstoßereignisses hinsichtlich der Beschleunigungswerte, der Geschwindigkeitswerte und der Wegwerte wird eine endgültige Klassifizierung des Zusammenstoßereignisses anhand der Kategorien vorgenommen, in die das Zusammenstoßereignis hinsichtlich Beschleunigung, Geschwindigkeit und Weg jeweils eingestuft wurde.

Dabei wird ein Zusammenstoßereignis als ein Zusammenstoß des Kraftfahrzeugs mit einer Person klassifiziert, wenn eine der folgenden beiden Bedingungen erfüllt ist:
(i) Das Zusammenstoßereignis ist sowohl hinsichtlich der Geschwindigkeitswerte als auch hinsichtlich der Wegwerte jeweils in die Kategorie "Personenzusammenstoß" eingestuft.
(ii) Das Zusammenstoßereignis ist hinsichtlich der Geschwindigkeitswerte und der Wegwerte jeweils in die Kategorie "harter Zusammenstoß" und hinsichtlich der Beschleunigungswerte in die Kategorie "weicher Zusammenstoß" eingestuft. Diese Bedingung betrifft vor allem die Fälle, in denen sich das von dem Kraftfahrzeug erfasste Objekt von einem zunächst weichen Objekt zu einem steifen Objektentwickelt, wie es beispielsweise bei einer Person der Fall ist, die von hinten von dem Fahrzeug erfasst wird.

In allen anderen Fällen wird das Zusammenstoßereignis als ein Nicht-Personenzusammenstoß klassifiziert.

Anhand der endgültigen Klassifizierung des Zusammenstoßereignisses wird die Entscheidung über die Auslösung einer gegebenenfalls einzuleitenden Sicherheitsmaßnahme getroffen. Bei einer Klassifizierung des Zusammenstoßereignisses als "Personenzusammenstoß" kann zum Schutz einer durch das Fahrzeug erfassten Person beispielsweise eine Sicherheitseinrichtung 28 aktiviert werden, welche eine Anhebung der Motorhaube des Kraftfahrzeugs bewirkt.

### Bezugszeichenliste

- 10: Beschleunigungssensor
- 12: Beschleunigungssensor
- 14: Stoßfänger
- 16: Fahrtrichtung
- 18: Metallträger
- 20: Schaummaterial
- 22: Außenhaut
- 24: elektrische Leitung
- 26: Auswerteeinheit
- 28: Sicherheitseinrichtung

## Patentansprüche

1. Verfahren zur Klassifizierung eines Zusammenstoßereignisses, bei dem durch ein Zusammenstoßereignis eine Auswertung der während eines vorbestimmten Auswertungszeitraums von einem Beschleunigungssensor (10, 12) ausgegebenen Beschleunigungswerte ausgelöst wird, welche die Schritte umfasst:
Ermitteln von Geschwindigkeitswerten und Wegwerten aus den ausgegebenen Beschleunigungswerten,
Einstufen des Zusammenstoßereignisses hinsichtlich der Beschleunigungswerte, der Geschwindigkeitswerte und der Wegwerte in jeweils eine von mehreren Kategorien, insbesondere in eine der Kategorien "weicher Zusammenstoß", "Personenzusammenstoß" und "harter Zusammenstoß", und
Klassifizieren des Zusammenstoßereignisses in Abhängigkeit von den Kategorien, in die das Zusammenstoßereignis hinsichtlich der Beschleunigungswerte, der Geschwindigkeitswerte und der Wegwerte jeweils eingestuft wurde.

2. Verfahren nach Anspruch 1,
**dadurch gekennzeichnet, dass**
die Kategorisierung des Zusammenstoßereignisses hinsichtlich Beschleunigung, Geschwindigkeit und Weg anhand der Beschleunigungs-, der Geschwindigkeits- und der Wegwerte eines einzelnen von mindestens zwei im Bereich eines Kraftfahrzeug-Stoßfängers (14) angeordneten Beschleunigungssensoren (10, 12) erfolgt.

3. Verfahren nach Anspruch 2,
**dadurch gekennzeichnet, dass**
die Kategorisierung des Zusammenstoßereignisses hinsichtlich Beschleunigung, Geschwindigkeit und Weg anhand der Beschleunigungs-, der Geschwindigkeits- und der Wegwerte desjenigen Beschleunigungssensors (10) erfolgt, der zuerst auf das Zusammenstoßereignis anspricht oder dessen Beschleunigungswerte zuerst einen vorbestimmten Auslöseschwellenwert überschreiten.

4. Verfahren nach einem der vorherigen Ansprüche,
**dadurch gekennzeichnet, dass**
die Kategorisierung des Zusammenstoßereignisses hinsichtlich der Beschleunigungswerte während eines Bruchteils des vorbestimmten Auswertezeitraums erfolgt.

5. Verfahren nach einem der vorherigen Ansprüche,
**dadurch gekennzeichnet, dass**
ein Zusammenstoßereignis als ein Zusammenstoß mit einer Person klassifiziert wird, wenn
(i) das Zusammenstoßereignis sowohl hinsichtlich der Geschwindigkeitswerte als auch hinsichtlich der Wegwerte jeweils in die Kategorie "Personenzusammenstoß" eingestuft wird, oder
(ii) das Zusammenstoßereignis hinsichtlich der Geschwindigkeitswerte und der Wegwerte jeweils in die Kategorie "harter Zusammenstoß" und hinsichtlich der Beschleunigungswerte in die Kategorie "weicher Zusammenstoß" eingestuft wird.

6. Verfahren nach einem der vorherigen Ansprüche,
**dadurch gekennzeichnet, dass**
die Kategorisierung des Zusammenstoßereignisses hinsichtlich Beschleunigung, Geschwindigkeit und Weg in Abhängigkeit davon erfolgt, ob das Minimum, das Maximum und/oder die Bandbreite der Beschleunigungs-, Geschwindigkeits- und Wegwerte jeweils entsprechende Schwellenwerte überschreiten.

7. Verfahren nach Anspruch 6,
**dadurch gekennzeichnet, dass**
die Höhe der Schwellenwerte jeweils von der Position des Zusammenstoßes relativ zu dem Beschleunigungssensor (10) und insbesondere davon abhängt, ob es sich um einen zentralen oder einen dezentralen Zusammenstoß handelt.

8. Verfahren nach einem der vorherigen Ansprüche,
**dadurch gekennzeichnet, dass**
die Position des Zusammenstoßes relativ zu dem Beschleunigungssensor (10) anhand der Beschleunigungswerte zweier im Bereich eines Kraftfahrzeug-Stoßfängers (14) angeordneter und insbesondere lateral zueinander beabstandeter Beschleunigungssensoren (10, 12) ermittelt wird.

9. Verfahren nach Anspruch 8,
**dadurch gekennzeichnet, dass**
ein Zusammenstoß als zentraler Zusammenstoß eingestuft wird, wenn
(a) der Verlauf der von den beiden Beschleunigungssensoren (10, 12) ausgegebenen Signale nicht wesentlich voneinander abweicht,
(b) sich die Variation der Beschleunigungswerte des einen Beschleunigungssensors (10) nicht wesentlich von der Variation der Beschleunigungswerte des anderen Beschleunigungssensors (12) unterscheidet, und
(c) die Abweichung der Beschleunigungswerte des einen Beschleunigungssensors (10) von denen des anderen Beschleunigungssensors (12) nicht im Bereich der Beschleunigungswerte selbst liegt.

10. Verfahren nach einem der vorherigen Ansprüche,
**dadurch gekennzeichnet, dass**
die während des Auswertungszeitraums ausgegebenen Beschleunigungswerte mit einem Kalibrierungsfaktor multipliziert werden, welcher von der Fahrzeuggeschwindigkeit und vom Fahrzeugtyp abhängig ist.

11. Verfahren nach einem der vorherigen Ansprüche,
**dadurch gekennzeichnet, dass**
die während des Auswertungszeitraums ausgegebenen Beschleunigungswerte, insbesondere durch Subtraktion des kleinsten der ausgegebenen Beschleunigungswerte, normiert werden.

## Claims

1. A method for the classification of a crash event, wherein an evaluation of the acceleration values output by an acceleration sensor (10, 12) during a predetermined evaluation period is triggered by a crash event, the evaluation comprising the steps:
determination of speed values and distance values from the output acceleration values;
placing of the crash event with respect to each of the acceleration values, to the speed values and to the distance values into a respective one of several categories, in particular into one of the categories "soft crash", "pedestrian crash" and "hard crash"; and
classification of the crash event in dependence on the categories into which the crash event was respectively placed with respect to the acceleration values, the speed values and the distance values.

2. A method in accordance with claim 1, **characterized in that** the categorization of the crash event takes place with respect to acceleration, speed and distance with reference to the acceleration values, the speed values and the distance values of a single one of at least two acceleration sensors (10, 12) arranged in the region of a motor vehicle bumper (14).

3. A method in accordance with claim 2, **characterized in that** the categorization of the crash event with respect to acceleration, speed and distance takes place with reference to the acceleration values, the speed values and the distance values of that acceleration sensor (10) which first responds to the crash event or whose acceleration values first exceed a predetermined trigger threshold value.

4. A method in accordance with any one of the preceding claims, **characterized in that** the categorization of the crash event takes place with respect to the acceleration values during a fraction of the predetermined evaluation period.

5. A method in accordance with any one of the preceding claims, **characterized in that** a crash event is classified as a crash with a person if
(i) the crash event is placed in each case into the category "pedestrian crash" both with respect to the speed values and with respect to the distance values; or
(ii) the crash event is placed in each case into the category "hard crash" with respect to the speed values and the distance values and into the category "soft crash" with respect to the acceleration values.

6. A method in accordance with any one of the preceding claims, **characterized in that** the categorization of the crash event takes place with respect to acceleration, speed and distance in dependence on whether the minimum, the maximum and/or the range of the acceleration values, speed values and distance values respectively exceed corresponding threshold values.

7. A method in accordance with claim 6, **characterized in that** the level of the threshold values depends in each case on the position of the crash relative to the acceleration sensor (10) and in particular on whether it is a central crash or a non-central crash.

8. A method in accordance with any one of the preceding claims,
**characterized in that** the position of the crash relative to the acceleration sensor (10) is determined with respect to the acceleration values of two acceleration sensors (10, 12) arranged in the region of a motor vehicle bumper (14) and in particular spaced apart from one another laterally.

9. A method in accordance with claim 8, **characterized in that** a crash is classified as a center crash if
(a) the shapes of the signals output by the two acceleration sensors (10, 12) do not substantially differ from one another;
(b) the variation of the acceleration values of the one acceleration sensor (10) does not differ substantially from the variation of the acceleration values of the other acceleration sensor (12); and
(c) the difference in the acceleration values of the one acceleration sensor (10) from those of the other acceleration sensor (12) does not lie in the range of the acceleration values themselves.

10. A method in accordance with any one of the preceding claims, **characterized in that** the acceleration values output during the evaluation period are multiplied by a calibration factor which is dependent on the vehicle speed and on the vehicle type.

11. A method in accordance with any one of the preceding claims, **characterized in that** the acceleration values output during the evaluation period are normed, in particular by subtraction of the smallest of the output acceleration values.

## Revendications

1. Procédé de classification d'un événement de collision dans lequel est déclenchée, par un événement de collision, une interprétation des valeurs d'accélération délivrées, pendant un intervalle de temps d'interprétation prédéterminé, par un capteur d'accélération (10, 12), laquelle comprend les étapes suivantes :
détermination de valeurs de vitesse et de valeurs de distance à partir des valeurs d'accélération délivrées,
classement de l'événement de collision en ce qui concerne les valeurs d'accélération, les valeurs de vitesse et les valeurs de distance, chaque fois dans l'une de plusieurs catégories, en particulier dans l'une des catégories suivantes : "collision douce", "collision avec personne" et "collision dure", et
classification de l'événement de collision en fonction des catégories, dans lesquelles l'événement de collision a été classé chaque fois en ce qui concerne les valeurs d'accélération, des valeurs de vitesse et des valeurs de distance.

2. Procédé selon la revendication 1,
**caractérisé en ce que**
le classement en catégories de l'événement de collision, en ce qui concerne l'accélération, la vitesse et la distance, s'effectue à l'aide des valeurs d'accélération, de vitesse et de distance d'un seul capteur parmi au moins deux capteurs d'accélération (10, 12) disposés dans la zone d'un pare-chocs de véhicule automobile (14).

3. Procédé selon la revendication 2,
**caractérisé en ce que**
le classement en catégories de l'événement de collision, en ce qui concerne l'accélération, la vitesse et la distance, s'effectue à l'aide des valeurs d'accélération, de vitesse et de distance du capteur d'accélération (10), qui réagit le premier à l'événement de collision ou dont les valeurs d'accélération dépassent en premier une valeur de seuil de déclenchement prédéterminée.

4. Procédé selon l'une quelconque des revendications précédentes,
**caractérisé en ce que**
le classement en catégories de l'événement de collision en ce qui concerne les valeurs d'accélération s'effectue pendant une fraction de l'intervalle de temps d'interprétation prédéterminé.

5. Procédé selon l'une quelconque des revendications précédentes,
**caractérisé en ce que**
un événement de collision est classé comme collision avec une personne lorsque
(i) l'événement de collision est classé dans la catégorie "collision avec personne" tant en ce qui concerne les valeurs de vitesse que les valeurs de distance, ou
(ii) l'événement de collision est classé dans la catégorie "collision dure" en ce qui concerne les valeurs de vitesse et les valeurs de distance, et est classé dans la catégorie "collision douce" en ce qui concerne les valeurs d'accélération.

6. Procédé selon l'une quelconque des revendications précédentes,
**caractérisé en ce que**
le classement en catégories de l'événement de collision, en ce qui concerne l'accélération, la vitesse et la distance, s'effectue en fonction du fait que le minimum, le maximum et/ou la largeur de bande des valeurs d'accélération, de vitesse et de distance dépassent chaque fois des valeurs de seuil correspondantes.

7. Procédé selon la revendication 6,
**caractérisé en ce que**
la hauteur des valeurs de seuil dépend chaque fois de la position de la collision par rapport au capteur d'accélération (10) et en particulier du fait qu'il s'agit d'une collision centrale ou d'une collision décentrée.

8. Procédé selon l'une quelconque des revendications précédentes,
**caractérisé en ce que**
la position de la collision par rapport au capteur d'accélération (10) est déterminée à l'aide des valeurs d'accélération de deux capteurs d'accélération (10, 12) disposés dans la zone d'un pare-chocs de véhicule automobile (14), et en particulier espacés latéralement l'un de l'autre.

9. Procédé selon la revendication 8,
**caractérisé en ce que**
une collision est classée comme collision centrale, si
(a) les allures des signaux délivrés par les deux capteurs d'accélération (10, 12) ne s'écartent pas sensiblement l'une de l'autre,
(b) la variation des valeurs d'accélération d'un capteur d'accélération (10) ne diffère pas sensiblement de la variation des valeurs d'accélération de l'autre capteur d'accélération (12), et
(c) l'écart des valeurs d'accélération d'un capteur d'accélération (10) par rapport à celles de l'autre capteur d'accélération (12) ne se situe pas dans le domaine des valeurs d'accélération elles-mêmes.

10. Procédé selon l'une quelconque des revendications précédentes,
**caractérisé en ce que**
les valeurs d'accélération, délivrées pendant l'intervalle de temps d'interprétation, sont multipliées par un facteur d'étalonnage, qui dépend de la vitesse du véhicule et du type du véhicule.

11. Procédé selon l'une quelconque des revendications précédentes,
**caractérisé en ce que**
les valeurs d'accélération, délivrées pendant l'intervalle de temps d'interprétation, sont normalisées, en particulier par soustraction de la plus petite des valeurs d'accélération délivrées.
